# EUROPÄISCHE PATENTSCHRIFT

(11) **EP 3 379 120 B1**
(45) Veröffentlichungstag und Bekanntmachung des Hinweises auf die Patenterteilung: **04.08.2021**
(21) Anmeldenummer: 18163567.3
(22) Anmeldetag: 23.03.2018
(51) Int. Cl.: F16K 31/06

(54) **ELEKTROMAGNETISCHE PRALLVENTILANORDNUNG**
ELECTROMAGNETIC IMPACT VALVE ARRANGEMENT
DISPOSITIF DE SOUPAPE DE DÉTENTE ÉLECTROMAGNÉTIQUE

(30) Priorität: 23.03.2017 DE 102017106297
(43) Veröffentlichungstag der Anmeldung: 26.09.2018
(73) Patentinhaber: Samson Aktiengesellschaft, 60314 Frankfurt am Main (DE)
(72) Erfinder: Kolbenschlag, Stefan, 64291 Darmstadt (DE)
(74) Vertreter: Schmid, Nils T.F.

(56) Entgegenhaltungen:
- DE-A1- 19 505 233
- DE-A1-102011 011 578
- DE-A1-102013 220 561
- DE-C2- 19 636 207
- US-A- 3 677 826
- US-A1- 2016 123 476

## Beschreibung

Die Erfindung betrifft ein Pneumatisch betriebenes Feldgerät, das einen pneumatischen Aktor, eine pneumatische Druckluftquelle, und eine elektromagnetische Prallplattenventilanordnung aufweist.

Eine gattungsgemäße elektromagnetische Prallventilanordnung mit einer Prallplatte als Prallventilglied ist aus DE 196 36 207 C2 bekannt, die sich in der Vergangenheit bewährt hat. Die elektromagnetische Prallventilanordnung hat eine Gehäusestruktur, in der üblicherweise ein Luftzuführkanal zum Anschließen an eine Luftdruckquelle, ein Luftabführkanal und ein Entlüftungskanal gebildet ist. Ein Prallventilglied in Form einer Prallplatte ist innerhalb der Prallventilanordnung beweglich gelagert. Eine elektromagnetische Stelleinrichtung verlagert das Prallventilglied zwischen zwei Betriebsstellungen, in der jeweils einer der Luftkanäle verschlossen ist. Das Prallventilglied wird in einer axialen Stellrichtung verlagert. Des Weiteren hat das Magnetventil ein Zwangsmittel, wie eine Feder, das das Prallventilglied in axialer Stellrichtung in eine Schließstellung zum Abschließen eines der Luftkanäle zwingt. Dabei bewährten sich der einfache technische Aufbau und die präzise Stellung durch die elektropneumatische Stelleinrichtung. Das bekannte Magnetventil bedarf einer präzisen Fabrikation, insbesondere dann, wenn ein präzises Abschließen des jeweiligen Luftkanals bei einem geringem Energiebedarf zu gewährleisten ist.

DE 19 505 233 A1 betrifft ein elektromagnetisches Ventil mit einer Fluidkammer, in die mindestens ein Fluideinlasskanal und ein Fluidauslasskanal münden, einem Elektromagneten, und einem Klappanker zum bedarfsweisen Verschließen der Mündungsöffnungen der Fluidauslasskanäle.

Eine andere gattungsgemäße elektromagnetische Prallventilanordnung wird in der deutschen Patentanmeldung mit dem amtlichen Aktenzeichen DE 10 2016 106 410.6 beschrieben. Diese elektromagnetische Prallventilanordnung umfasst ein Prallventilglied mit einer beweglich gelagerten Prallventilkugel. Eine elektromagnetische Stelleinrichtung verlagert das Prallventilglied in einer axialen Stellrichtung zwischen zwei Betriebsstellungen, in denen der Luftzuführkanal oder der Entlüftungskanal verschlossen ist. Die Prallkugel wirkt mit einer scheibenartigen, magnetisierbaren Prallplatte zusammen, die sich mit der Prallkugel bewegt. Ein Zwangsmittel, wie eine Feder, drängt die Prallplatte mit der Prallventilkugel gegen den Mündungsrand des Zuführkanals, um diesen luftdicht zu verschließen. Bei der in DE 10 2016 106 410.6 beschriebenen Prallventilanordnung verläuft die Stellachse koaxial zu der Achse des Elektromagneten, dessen Kern als Hohlzylinder realisiert ist, um den Entlüftungskanal zu realisieren. Bei unverändert hoher Verlässlichkeit erlaubt die elektromagnetische Prallventilanordnung gemäß DE 10 2016 106 410.6 gegenüber der aus DE 196 362 07 C2 bekannten Prallventilanordnung den Betrieb eines Stellungsreglers mit einem deutlich verringerten Energiebedarf.

DE 10 2011 011578 A1 betrifft ein Ventilgehäuse, das eine mit mehreren Ventilkanälen kommunizierende Ventilkammer aufweist, in der eine Ventilgliedanordnung derart verschwenkbar aufgenommen ist, dass sie zwei den Ventilkanälen zugeordnete steuerbare Kanalöffnung wahlweise freigeben oder verschließen kann.

US 2016/123476 A1 betrifft ein Magnetventil mit einer einzelnen magnetischen Spule und zwei Kolben (zwei Ventilkörpern).

US 3,677,826 A1 beschreibt ein Dreiwege Solenoidventil zum Verteilen eines Fluides unter Druck.

Wenn bei herkömmlichen Prallventilanordnungen ein bestimmter Stelldruck zum Erzeugen einer bestimmten Stellkraft generiert werden soll oder ein bestimmter Volumenstrom zur Einstellung der Stellgeschwindigkeit eines Aktors erzeugt werden soll, muss die elektromagnetische Prallventilanordnung fortlaufend zwischen Druckerhöhung und Druckabsenkung hin und her wechseln. Alternativ muss für einen bestimmten Volumenstrom bei einem herkömmlichen Ventil die Prallplatte eine bestimmte Zwischenstellung einnehmen, in der gleichzeitig sowohl der Entlüftungskanal als auch der Belüftungskanal geöffnet sind, um den gewünschten Stelldruck oder Volumenstrom näherungsweise konstant zu halten. Bei einer solchen Zwischenstellung oder einem ständigen Wechsel geht fortwährend Pneumatikdruckluft verloren.

Es ist eine Aufgabe der Erfindung, die Nachteile des Stands der Technik zu überwinden, insbesondere eine elektromagnetische Prallventilanordnung für ein pneumatisch betriebenes Feldgerät insbesondere der gattungsgemäßen Art bereitzustellen, sodass selbst bei unterschiedlichen Betriebssituationen eine präzise Funktionsweise des elektromagnetischen Magnetventils bei möglichst geringem, insbesondere elektrischem und/oder pneumatischem, Energiebedarf gewährleistet ist.

Diese Aufgabe wird durch die Merkmale von Anspruch 1 gelöst.

Danach ist eine elektromagnetische Prallventilanordnung für ein pneumatisch betriebenes Feldgerät, insbesondere Stellgerät einer prozesstechnischen Anlage, wie einer chemischen Anlage, einer petrochemischen Anlage, einer Lebensmittel verarbeitenden Anlage, wie einer Brauerei, einer Kraftwerksanlage, wie einer Kernkraftwerkanlage, oder dergleichen, vorgesehen. Die elektromagnetische Prallventilanordnung hat eine Luftkammer mit drei Luftkanälen. Die drei Luftkanäle umfassen einen Luftversorgungskanal zum Empfangen von Druckluft von einer Druckluftversorgungsquelle, einen Steuerluftkanal zum Be- und Entlüften eines pneumatischen Aktors des Feldgeräts und einen Entlüftungskanal zum Abgeben von Druckluft an eine Drucksenke, wie die Atmosphäre. Vorzugsweise münden in die Luftkammer nicht mehr als drei Luftkanäle. Insbesondere ist die Prallventilanordnung derart ausgestaltet, dass die Luftkammer mit Ausnahme ihrer Luftkanäle luftdicht abgeschlossen ist, insbesondere gegenüber der Druckluftversorgungsquelle und/oder der Drucksenke, vorzugsweise für Druckdifferenzen zwischen dem Druck der Druckluftversorgungsquelle und dem der Drucksenke, insbesondere der Atmosphäre, bis zu 6 bar, bis zu 10 bar, oder sogar bis zu 15 bar.

Erfindungsgemäß weist die Prallventilanordnung ein erstes elektromagnetisches Prallventil zum Öffnen und/oder Schließen des Luftversorgungskanals auf, das auch als Belüftungsprallventil bezeichnet sein kann. Ferner weist die erfindungsgemäße Prallventilanordnung ein zweites elektromagnetisches Prallventil zum Öffnen und/oder Schließen des Entlüftungskanals auf, das als Entlüftungsprallventil bezeichnet sein kann. Vorzugsweise ist das Belüftungsprallventil im Bereich des Luftversorgungskanals, insbesondere an der Mündung des Luftversorgungskanals zu der Luftkammer angeordnet. Das Entlüftungsprallventil ist insbesondere im Bereich des Entlüftungskanals, vorzugsweise an dessen Mündung zum Luftkanal oder an dessen drucksenkenseitiger Mündung, insbesondere Atmosphärenmündung, angeordnet. Es sei klar, dass das Belüftungsprallventil und das Entlüftungsprallventil nicht dasselbe Prallventilglied nutzen. Insbesondere weist das erste elektromagnetische Prallventil ein erstes Prallventilglied auf, das im Bereich des Luftversorgungskanals angeordnet und zum selektiven Verschließen des Luftversorgungskanals ausgestaltet ist. Das zweite elektromagnetische Prallventil weist ein zweites Prallventilglied auf, das im Bereich des Entlüftungskanals angeordnet und zum selektiven Verschließen des Entlüftungskanals ausgestaltet ist. Durch die Verwendung von zwei unterschiedlichen Prallventilgliedem ist die erfindungsgemäße elektromagnetische Prallventilanordnung strukturell gegenüber den beiden oben genannten gattungsgemäßen elektromagnetischen Prallventilanordnungen verkompliziert. Im Unterschied zu den bekannten gattungsgemäßen elektromagnetischen Prallventilanordnungen gestattet die Verwendung zweier Prallventile, je eines am Luftversorgungseingang und eines am Entlüftungsausgang der Luftkammer, eine differenzierte Einstellbarkeit der Prallventilanordnung. Das erste elektromagnetische Prallventil kann angesteuert werden, den Luftversorgungskanal zu öffnen oder zu schließen. Das zweite elektromagnetische Prallventil kann dazu angesteuert werden, den Entlüftungskanal zu öffnen oder zu schließen. Vorzugsweise können sich das erste Prallventilglied und das zweite Prallventilglied mechanisch unabhängig voneinander bewegen. Insbesondere kann eine Stellbewegung des ersten Prallventilglieds keine mechanische Zwangsbetätigung des zweiten Prallventilglieds zur Folge und/oder eine Stellbetätigung des zweiten Prallventilglieds hat nicht notwendigerweise eine mechanische Zwangsbetätigung des ersten Prallventilglieds zur Folge. Das erste elektromagnetische Prallventil und das zweite elektromagnetische Prallventil können beispielsweise gleichzeitig geöffnet oder gleichzeitig geschlossen sein.

Gemäß einer Ausführung sind das erste Prallventil und das zweite Prallventil elektromagnetisch miteinander gekoppelt. Die elektromagnetische Kopplung des ersten und des zweiten Prallventils gestattet eine einfache und energiesparende Betätigung der Prallventilanordnung. Die elektromagnetische Kopplung des Belüftungsprallventils und des Entlüftungsprallventils hat einen einfachen Aufbau der erfindungsgemäßen Prallventilanordnung zur Folge. Indem vorzugsweise dasselbe elektromagnetische Feld zur Betätigung der beiden Prallventile der Prallventilanordnung vorgesehen ist, kann verhindert werden, dass ein elektromagnetisches Feld des ersten Prallventils und ein elektromagnetisches Feld des zweiten Prallventils einander gegenseitig stören könnten.

Gemäß einer bevorzugten Ausführung der Erfindung sind das erste Prallventil und das zweite Prallventil derart elektromagnetisch miteinander gekoppelt, dass dieselbe wenigstens eine Magnetspule in elektromagnetischer Wirkverbindung mit dem ersten Prallventil und dem zweiten Prallventil steht. Die Prallventilanordnung kann auch zwei, drei oder mehrere Magnetspulen aufweisen, die sowohl mit dem ersten Prallventil als auch dem zweiten Prallventil in Wirkverbindung stehen. Die Prallventilanordnung kann insbesondere einen Satz von Magnetspulen aufweisen, der sowohl mit dem ersten als auch mit dem zweiten Prallventil in elektromagnetischer Wirkverbindung steht. Indem wenigstens eine Magnetspule sowohl mit dem ersten als auch mit dem zweiten Prallventil in elektromagnetischer Wirkverbindung steht, kann durch das elektrische Betätigen bzw. Bestromen derselben Magnetspule(n) eine Betätigung sowohl des Belüftungsprallventils als auch des Entlüftungsprallventils verursacht werden. Die bevorzugte Ausführung der erfindungsgemäßen elektromagnetischen Prallventilanordnung bietet dadurch den Vorteil, dass der Montageaufwand und der Steuerungsaufwand gering gehalten werden. Indem die gemeinsame Magnetspule des ersten Prallventils und des zweiten Prallventils zum Erzeugen eins Magnetfeldes mit elektrischer Energie beaufschlagt wird, können beide Prallventile der elektromagnetischen Prallventilanordnung gleichzeitig angesteuert werden, sodass mit geringem Steuerungs-Aufwand eine hochpräzise Ansteuerung erfolgen kann. Alternativ oder zusätzlich können das erste Prallventil und das zweite Prallventil derart elektromagnetisch miteinander gekoppelt sein, dass derselbe Eisenkern in elektromagnetischer Wirkverbindung mit dem ersten Prallventil und dem zweiten Prallventil steht. Gemäß einer weiteren alternativen oder zusätzlichen, ergänzenden Ausgestaltung können das erste Prallventil und das zweite Prallventil derart elektromagnetisch miteinander gekoppelt sein, dass derselbe Anker bzw. dasselbe Joch in elektromagnetischer Wirkverbindung mit dem ersten Prallventil und dem zweiten Prallventil steht. Indem die beiden Prallventile mit demselben Eisenkern und/oder demselben Anker in elektromagnetischer Wirkverbindung stehen, kann mit derselben oder unterschiedlichen Magnetspulen ein erzeugtes Magnetfeld effektiv und zielgerichtet sowohl für das Belüftungsprallventil als auch das Entlüftungsprallventil erzeugt werden. Gemäß einer besonders bevorzugten Ausführung kann ein einziger Elektromagnet mit einem Magnetspulen-umwickeltem Eisenkern vorgesehen sein, an dessen magnetischem Nord- oder Südpol das erste Prallventil angeordnet ist und an dessen anderem magnetischen Pol das zweite Prallventil angeordnet ist. Das erste Prallventil und/oder das zweite Prallventil kann zumindest teilweise ein magnetisches oder magnetisierbares, beispielsweise weichmetallisches, Prallventilglied aufweisen oder mit einem magnetischen oder zumindest teilweise magnetisierbar beweglichen Teil in mechanischer Wirkverbindung stehen. Das magnetische oder magnetisierbare Teil, welches Teil des Prallventilglieds oder zumindest damit verbunden ist, kann derart angeordnet sein, dass der Eisenkern und der Anker oder das Joch des Elektromagneten mittels des Teils magnetisch verbindbar sind.

Gemäß einer bevorzugten Ausführung der Erfindung sind das erste Prallventil und das zweite Prallventil derart aufeinander abgestimmt, dass der Luftversorgungskanal und der Entlüftungskanal gleichzeitig schließbar sind. Auf diese Weise lassen sich erhebliche Druckluftenergieeinsparungen bezwecken. Während bei den herkömmlichen, oben beschriebenen elektromagnetischen Prallventilanordnungen stets entweder das Belüftungsventil oder das Entlüftungsventil geöffnet wird, wird bei einer gewöhnlichen Prallventilanordnung stets eine pneumatische Verbindung zwischen dem mit dem Steuerungskanal in fluidischer Kommunikationsverbindung stehenden pneumatischen Aktor des Feldgeräts und der Druckluftquelle oder der Drucksenke hergestellt. So erfährt der pneumatische Aktor üblicherweise stets entweder eine Druckerhöhung, wenn der Belüftungskanal geöffnet ist, oder eine Druckabsenkung, wenn der Entlüftungskanal geöffnet ist.

Indem die beiden Prallventile, das Belüftungsventil und das Entlüftungsventil der elektromagnetischen Prallventilanordnung, gleichzeitig einen den jeweiligen Luftkanal schließenden Zustand einnehmen können, kann bewirkt werden, dass in der Luftkammer der elektromagnetischen Prallventilanordnung ein konstanter Stelldruck gehalten wird , wobei keine Luft aus dem Entlüfungskanal entweicht. Gemäß der bevorzugten Ausführung der erfindungsgemäßen elektromagnetischen Prallventilanordnung kann also zusätzlich zu den Zuständen Druckerhöhung und Druckabsenkung ein Zustand der Druckkonstanz bewirkt werden. Wenn die elektromagnetische Prallventilanordnung den Druckkonstanz-Zustand einnimmt, kann dadurch ein vorbestimmter gewünschter Stelldruck des pneumatischen Aktors, der mit der Luftkammer durch den Steuerungskanal in einer pneumatischen Kommunikationsverbindung steht, diesen Stelldruck konstant halten, mit einem gegenüber herkömmlichen elektromagnetischen Prallventilanordnungen erheblich reduzierten oder gar völlig vermiedenen Druckluftverbrauch.

Indem nur das Belüftungsventil geöffnet ist, kann ein konstanter Volumenstrom durchgelassen werden. Es kann ein proportionales Verhalten zwischen dem Magnetspulen-Steuerstrom und dem Druck des Steuerluftkanals zum Be- oder Entlüften des pneumatischen Aktors bereitgestellt werden. Insbesondere kann jedem eingestellten Magnetspulen-Steuerstrom ein bestimmter Steuerluftdruck oder Steuerluftvolumenstrom entsprechen.

Während das Entlüftungsventil geschlossen ist, kann das Belüftungsventil eine Schließstellung einnehmen oder sich ausgehend von der Schließstellung öffnen, wobei ein Öffnungsquerschnitt des Belüftungsventils vorzugsweise stufenlos einstellbar sein kann. Das Belüftungsventil kann unterschiedliche offene Stellungen einnehmen, um eine Drosselwirkung bereitzustellen, sodass ein gewünschter Volumenstrom von der Druckluftversorgungsquelle zu dem Steuerluftkanal vorzugsweise konstant einstellbar ist. Auf diese Weise kann ein proportionales Verhalten zwischen einer Steuerungsbetätigungsgröße, beispielsweise einem Magnetspulen-Steuerungsstrom eines elektromagnetischen Aktors, und dem Volumenstrom durch den Steuerluftkanal zum Betätigen des pneumatischen Aktors erreicht werden.

Gemäß einer bevorzugten Weiterbildung der Erfindung ist die elektromagnetische Prallventilanordnung derart ausgestaltet, dass das zweite Prallventil schließt, bevor das erste Prallventil öffnet, und dass das erste Prallventil schließt, bevor das zweite Prallventil öffnet. Eine derartige konstruktive oder steuerungstechnische Abstimmung des ersten Prallventils und des zweiten Prallventils hat zur Folge, dass bei einem Umschalten zwischen einem Druckanhebungszustand, in dem das Entlüftungsventil geschlossen und das Belüftungsventil geöffnet ist, sodass eine pneumatische Kommunikationsverbindung von der Druckluftversorgungsquelle zu dem pneumatischen Aktor bereitgestellt ist, in den Druckabsenkungszustand, in dem das Belüftungsventil geschlossen ist und in dem das Entlüftungsventil geöffnet ist, sodass eine pneumatische Kommunikationsverbindung von dem pneumatischen Aktor zu der Drucksenke vorliegt, stets derart erfolgt, dass ein Übergang über den Druckkonstanz-Zustand der elektromagnetischen Prallventilanordnung eintritt. Bevor die Prallventilanordnung von Druckanhebung zu Druckabsenkung wechselt, muss die Prallventilanordnung zunächst von Druckanhebung zu Druckkonstanz wechseln, um anschließend von Druckkonstanz zu Druckabsenkung wechseln zu können. Umgekehrt muss beim Wechsel von Druckabsenkung zu Druckanhebung zunächst ein Zwischenschritt erfolgen, bei dem die Prallventilanordnung von Druckabsenkung zu Druckkonstanz wechselt, und erst anschließend von Druckkonstanz zu Druckanhebung wechseln kann. Ein undefinierter Zwischenzustand entfällt.

Vorzugsweise kann das erste Prallventil dazu ausgelegt sein, bei einem ersten Magnetspulen-Steuerstrom-Schwellenwert zwischen dem geöffneten und dem geschlossenen Zustand zu wechseln und das zweite Prallventil kann dazu ausgestaltet sein, bei einem zweiten Magnetspulen-Steuerstrom-Schwellenwert zwischen dem geöffneten und dem geschlossenen Zustand zu wechseln. Die Prallventilanordnung kann dann derart ausgestaltet sein, dass bei einem Magnetspulen-Steuerstrom und unterhalb des ersten und zweiten Schwellenwerts das Entlüftungsprallventil geöffnet und das Belüftungsprallventil geschlossen ist. Wird der Magnetspulen-Steuerstrom auf einen Wert erhöht, der oberhalb des zweiten Schwellenwerts aber noch unterhalb des ersten Schwellenwerts liegt, können beide Prallventile der Prallventilanordnung geschlossen sein. Wenn also sowohl der erste als auch der zweite Schwellenwert von dem Magnetspulen-Steuerstrom-Schwellenwert überschritten wird, kann das Belüftungsventil geöffnet und das Entlüftungsventil geschlossen sein.

Gemäß einer bevorzugten Ausführung der Erfindung umfasst das erste Prallventil, also das Belüftungsprallventil, ein Prallventilglied, wie eine Prallplatte, eine Prallkugel oder dergleichen, eine elektromagnetische Stelleinrichtung, die das Prallventilglied zum Öffnen und/oder Schließen des Versorgungsluftkanals in einer axialen Stellrichtung verlagert, sowie insbesondere ein vorzugsweise krafteinstellbares Zwangsmittel, wie eine Feder, insbesondere mit einstellbarer Vorspannung, das das erste Prallventilglied in der axialen Stellrichtung in eine Schließstellung zum Abschließen des Versorgungsluftkanals zwingt. Bevorzugt wirkt die magnetische Betätigungskraft von der elektromagnetischen Stelleinrichtung mittelbar oder unmittelbar auf das Prallventilglied entgegen der Wirkungsrichtung der Schließkraft des Zwangsmittels. Die von der Stelleinrichtung bereitstellbare elektromagnetische Betätigungskraft oder Steuerkraft kann wenigstens 0,01 N, 0,02 N, 0,05 N oder 0,075 N und/oder höchstens 10 N, 5 N, 1 N, 0,5 N, 0,25 N oder 0,1 N betragen. Bevorzugt ist eine Betätigungskraft von 0,09 N bereitgestellt. Vorzugsweise wirkt das Zwangsmittel entgegen einer auf das erste Prallventilglied wirkenden Druckkraft durch die Druckluft von der Druckluftversorgungsquelle. Insbesondere ist die Schließkraft des Zwangsmittels derart einstellbar, dass sie nur geringfügig höher ist als die auf das erste Prallventilglied wirkende Druckkraft, vorzugsweise wenigstens 0,001 N, 0,002 N, 0,005 N, 0,0075 N, 0,0010 N und/oder höchstens 0,075 N, 0,05 N, 0,02 N oder 0,015 N größer eingestellt als die vorgesehene Versorgungsdruckkraft. Die durch das Zwangsmittel erzeugte Schließkraft wird vorzugsweise derart gewählt, dass sie bei dem vorbestimmten Versorgungsdruck unter Berücksichtigung des pneumatisch wirksamen Querschnitts des ersten Prallventilglieds und zu erwartender Druckluftschwankungen eine sichere Schließstellung des ersten Prallventilglieds gewährleistet ist. Vorzugsweise ist die Zwangsmittel-Schließkraft so klein wählbar und insbesondere frei einstellbar, dass eine energiesparsame elektromagnetische Stelleinrichtung mit geringer, vorzugsweise energieverbrauchsoptimierter, elektromagnetischer Stellwirkung das erste Prallventilglied in seine Öffnungsstellung verbringen kann. Die Zwangsmittel-Schließkraft muss im Vergleich zu der durch die elektromagnetische Stelleinrichtung bereitstellbare Öffnungskraft ausreichend klein sein, dass mit ausreichender Betriebssicherheit gewährleistet ist, dass das erste Prallventilglied sicher in den geöffneten Zustand gestellt werden kann. Vorzugsweise ist die durch die elektromagnetische Stelleinrichtung bereitstellbare Öffnungskraft für das erste Prallventilglied insbesondere geringfügig größer als die effektive Schließkraft bei Normalbetrieb der Druckluftversorgungsquelle. Vorzugsweise ist die durch die elektromagnetische Stelleinrichtung bereitstellbare Öffnungskraft für das erste Prallventilglied wenigstens 1,05x, wenigstes 1,1x oder wenigstens 1,15x so groß wie die Zwangsmittel-Schließkraft, bzw. wie die effektive Schließkraft bei Normalbetrieb der Druckluftversorgungsquelle. Die Öffnungskraft ist bevorzugt höchstens 2,0x, höchstens 1,5x oder höchstens 1,2x so groß wie die effektive Schließkraft bei Normalbetrieb der Druckluftversorgungsquelle. Das zweite Prallventil ist vorzugsweise frei von einem Zwangsmittel, welches es in seine Schließstellung zwingt. Das zweite Prallventil kann ein Zwangsmittel aufweisen, das es in Richtung seiner geöffneten Stellung drängt.

Gemäß einer bevorzugten Weiterbildung der Erfindung ist mit dem ersten Prallventil ein vorbestimmter, vorzugsweise konstanter, Steuerdruck in der Luftkammer und/oder dem Steuerluftkanal, insbesondere abhängig von, vorzugsweise proportional zu, einem Steuerstrom der elektromagnetischen Stelleinrichtung, einstellbar. Der von der Versorgungsdruckluftquelle bereitgestellte Versorgungsdruck ist vorzugsweise konstant. Vorzugsweise entspricht je ein vorbestimmter Steuerstrom einem vorbestimmten, insbesondere konstanten Steuerluftdruck. Insbesondere kann das erste Prallventil derart dimensioniert sein, die abhängig von einem Steuerstrom bereitstellbare elektromagnetische Steuerkraft der Stelleinrichtung, die entgegen dem Zwangmittel wirkt, im Hinblick auf den verfügbaren bereitgestellten Versorgungsdruck von der Versorgungsdruckluftquelle insbesondere derart dimensioniert sind, dass der bezüglich des Prallventilglieds stellwegabhängige Kraftverlauf des Zwangsmittels derart entgegen der in Öffnungsrichtung wirkenden Kräfte in Folge der Druckdifferenz zwischen Versorgungsdruck und Steuerdruck zuzüglich der elektromagnetischen Stellkraft ausgehend von der Stelleinrichtung wirkt, dass eine Änderung des Steuerstroms eine proportionale Änderung des Steuerdrucks zur Folge hat. Auf diese Weise lässt sich gemäß dieser bevorzugten Weiterbildungen der erfindungsgemäßen Prallplattenventilanordnung eine besonders einfache Regelung hinsichtlich eines vorbestimmten, vorzugsweise konstanten, Steuerdrucks erreichen. Dabei ist besonders vorteilhaft, dass beispielsweise im Falle einer Leckage in dem pneumatischen Aktor des Stellgeräts oder falls das Stellgerät einen permanenten Steuerluft-Volumenstrom benötigt, mittels einer konstanten Einstellung eines Steuerstroms eine variable Öffnungsweite des ersten Prallventils gewährleistet sein kann, um den Steuerluftabfluss an dem pneumatischen Aktor auszugleichen.

Gemäß der Erfindung ist das erste Prallventil stromlos geschlossen und das zweite Prallventil stromlos offen. Bei dieser Ausführung herrscht in einem stromlosen Zustand, bei dem vorzugsweise die Magnetspule der elektromagnetischen Stelleinrichtung nicht bestromt ist, so liegt bei Stromlosschaltung der elektromagnetischen Prallventilanordnung ein Druckabsenkungs- oder Notentlüftungszustand vor.

Gemäß einer speziellen Ausführung kann das erste Prallventil ein Zwangmittel haben, das es zwar in Richtung der Schließstellung drängt, das jedoch keine Schließkraft aufzubringen vermag, die größer ist als die auf das erste Prallventilglied wirkende Versorgungsdruckluftkraft. Vielmehr ist die Drängkraft eines derartigen Zwangmittels höchstens so groß wie die Versorgungsdruckluftkraft oder etwas kleiner. Stromaufwärts des ersten Prallventils kann von dem Steuerluftkanal eine Bypass-Abzweigung zu dem pneumatischen Aktor oder dem Steuerluftkanal führen. Für bestimmte pneumatische Stellgeräte kann ein minimaler Restluftverbrauch gewünscht sein, beispielsweise als Spülluft für Stellungsregler, bei denen ein Korrosionsrisiko besteht, z.B. aufgrund von Feuchtigkeit oder korrosiven Gasen, die in die Geräte eindringen können und durch die pneumatische Versorgungsluft ausgewaschen werden sollen.

Bei einer bevorzugten Ausführung der Erfindung sind das erste Prallventil und das zweite Prallventil elektromagnetisch derart gleich dimensioniert, dass an dem ersten Prallventil und an dem zweiten Prallventil bei Anlegen desselben Magnetsteuerstroms bzw. Magnetspulen-Steuerstroms im Wesentlichen gleich große magnetische Kräfte wirken. Die Größe der elektromagnetischen Stellkraft auf das erste Prallventil ist also bevorzugt genauso groß wie die elektromagnetische Stellkraft, die auf das zweite Prallventilglied wirkt. Auf diese Weise ist konstruktiv eine einfache Ansteuerbarkeit der elektromagnetischen Prallventilanordnung sichergestellt.

Gemäß einer bevorzugten Ausführung der Erfindung sind das erste Prallventil und das zweite Prallventil pneumatisch derart gleich dimensioniert, dass bei Anliegen derselben Druckdifferenz an dem jeweiligen Prallventil im Wesentlichen gleich große pneumatische Druckkräfte auf die Prallventilglieder der Prallventile wirken. Vorzugsweise ist die effektive pneumatische Wirkfläche des ersten Prallventilglieds gleich der effektiven pneumatischen Wirkfläche des zweiten Prallventilglieds. Vorzugsweise ist der Zuluftkanal im Bereich des ersten Prallventilglieds genauso groß wie der Entlüftungskanal im Bereich des zweiten Prallventilglieds. Es ist auch denkbar, dass der effektive pneumatische Querschnitt des Belüftungsventils größer oder gleich dem effektiven pneumatischen Querschnitt des Entlüftungsventils dimensioniert ist, damit, beispielsweise bei einem Ausfall eines Schließ-Zwangsmittels des Belüftungsventils, eine andere Druckkraft zum Öffnen des Belüftungsventils nötig ist als zum Öffnen des Entlüftungsventils.

Gemäß einer bevorzugten Ausführung einer erfindungsgemäßen Prallventilanordnung umfasst das erste Prallventil ein auf der Stellrichtungsachse liegendes Verschlusselement, das beim Verschließen des Luftzufuhrkanals mit einer von dem Prallventilsitz des ersten Prallventils eingefassten Ventildüse des Luftzufuhrkanals derart in Eingriff kommt, dass das erste Prallventilglied in einem umlaufenden Axialabstand zu der ersten Ventildüse angeordnet ist. Alternativ oder zusätzlich kann das zweite Prallventil ein auf der Stellrichtungsachse liegendes zweites Verschlusselement umfassen, das zum Verschließen des Entlüftungskanals mit einer von dem zweiten Prallventilsitz eingefassten Prallventildüse des Entlüftungskanals derart in Eingriff kommt, dass das zweite Prallventilglied in einem umlaufenden Axialabstand zu der zweiten Ventildüse angeordnet ist.

Es sei klar, dass der umlaufende Axialabstand sich insbesondere dann einstellt, wenn das Prallventilglied in einer insbesondere lotrechten Lage zur Stellrichtungsachse ausgerichtet ist. Dabei ist das Prallventilglied im Hinblick auf den Mündungsrand des zu verschließenden Luftkanals derart dimensioniert, dass ein selbstständiges Ausrichten des Prallventilglieds bei dessen Verlagerung in die Verschlussposition insbesondere unter dem Einfluss der elektromagnetischen Kräfte und/oder des Zwangsmittels veranlasst wird. Vorzugsweise sind der zu verschließende Luftkanal und dessen Mündungsrand in der Luftkammerbegrenzungswand als Ventilsitzbohrung oder separater Düseneinsatz ausgeführt. Das Prallventilglied, die Sitzbohrung und ein insbesondere axialer Maximalhub des Prallventilglieds in der Luftkammer sind so dimensioniert/ausgelegt, dass das Prallventilglied, insbesondere im Bereich der Sitzbohrungen, insbesondere durch den Begrenzungsrand der Gehäusestruktur / einer Kernstruktur der elektromagnetischen Stelleinrichtung oder des Düseneinsatzes, gehalten wird und beim Betätigen/Schließen sich insbesondere selbstständig mittig der Sitzbohrung oder dem Düseneinsatz zentriert. In dem insbesondere unbetätigten Betrieb bilden die Bohrungsränder der Sitzbohrung (bzw. der Ringrand des Einsatzes) die Haltestruktur, gegen die das Prallventilglied trifft, um in Radialrichtung gehalten zu werden. Beim Betätigen/Schließen des insbesondere kugelförmigen Prallventilglieds tritt die automatische Zentrierung ein.

Bei einer bevorzugten Ausführung der Erfindung ist das Verschlusselement als ein von dem vorzugsweise planen Prallventilglied vorragenden Vorsprung gebildet, der insbesondere zumindest teilweise konvexsphärisch geformt ist. Vorzugsweise ist das Verschlusselement als separat in der Prallplatte montierte Kugel ausgebildet und/oder aus einem nichtmagnetischen Material, wie Keramik oder Edelstahl, gebildet. Vorzugsweise besteht die separat montierte Kugel ausschließlich aus dem nicht magnetischen Material. Auf diese Weise wird der Magnetfluss nicht in Richtung des Verschlusselements gelenkt, sondern davon abgelenkt, so dass der Magnetfluss wegen des nichtmagnetischen Verschlusselementmaterials umgeleitet wird. Ein magnetisches Kleben der Kugel wegen des Restmagnetismus zwischen Kugel und Sitz ist daher verhindert.

Vorzugsweise ist wenigstens ein Luftkanal, wie der Entlüftungskanal oder die Luftkammer, in dem Kern der elektromagnetischen Stelleinrichtung ausgebildet. Insbesondere bei dieser Ausführung der Luftkammer oder des Luftkanals in dem Kern, in dem der Verschlussbereich dicht verschließend zusammenwirken soll, ist es von Vorteil, das nichtmagnetische Material für das Verschlusselement vorzusehen.

Vorzugsweise ist die axiale insbesondere maximale Bewegungsamplitude des Prallventilglieds in axialer Stellrichtung mindestens 1/10, mindestens 1/8 oder mindestens ¼ des Düsendurchmessers und/oder höchstens 9/10, höchstens 2/3, höchstens ½ des Düsendurchmessers. Insbesondere beträgt der Hub bzw. die Bewegungsamplitude zwischen 0,1 mm und 1,5 mm, vorzugsweise zwischen 0,2 mm und 0,6 mm, besonders bevorzugt 0,4 mm. Die Prallplattendicke (Querschnitt) ist vorzugsweise wenigstens so dick, dass Sie bei maximaler Bestromung der Magnetspule noch nicht in die magnetische Sättigung kommt. Insbesondere hat die Prallplatte eine geringe Dicke von weniger als 2 mm, vorzugsweise weniger als 1 mm, besonders bevorzugt weniger als 0,5 mm, um die Masse der Prallplatte klein zu halten.

Gemäß einer bevorzugten Ausführung einer erfindungsgemäßen Prallventilanordnung umfasst das zweite Prallventil, also das Entlüftungsventil, ein Prallventilglied, wie eine Prallplatte, eine Prallkugel oder dergleichen, und eine elektromagnetische Stelleinrichtung, die das zweite Prallventilglied zum Öffnen und/oder Schließen des Entlüftungskanals in einer axialen Stellrichtung verlagert, sowie insbesondere ein in der axialen Stellrichtung gegenüber dem Prallventilsitz angeordnetes mechanisches Widerlager wie eine Anschlags-Stellschraube, das eine maximale axiale Wegstrecke des zweiten Prallventils begrenzt. Das mechanische Widerlager des zweiten Prallventilglieds kann die maximale axiale Wegstrecke des zweiten Prallventils einstellbar oder konstant festlegen. Eine kurze maximale axiale Wegstrecke des zweiten Prallventilglieds kann gewählt sein, sodass das zweite Prallventilglied in dem kurzen maximalen Axialabstand zu der zweiten Ventildüse in dem geöffneten Zustand des Entlüftungsventils den Öffnungsquerschnitt der Düsenöffnung gerade vollständig freigegibt. Ein kurzer Stellweg ist im Hinblick auf den elektrischen Energieverbrauch vorteilhaft, um den magnetischen Spalt zwischen dem elektromagnetischen Stellvorrichtung und dem magnetisch zu betätigenden Prallventilglied gering zu halten. Ein kurzer Stellweg kann auch im Hinblick auf ein sicheres Schließen gewünscht sein.

Gemäß einer bevorzugten Ausführung der Erfindung umfasst das erste Prallventil auf der Stellrichtungsachse eine erste Ventildüse, die von dem ersten Prallventilsitz eingefasst ist, wobei die Stellrichtungsachse im Wesentlichen parallel zu der Wirkachse des Elektromagneten bzw. der elektromagnetischen Stelleinrichtung ausgerichtet und im Bereich des Eisenkerns, insbesondere koaxial zu dem Eisenkern, angeordnet ist. Alternativ oder zusätzlich kann das zweite Prallventil auf der Stellrichtungsachse eine zweite Ventildüse umfassen, die von dem zweiten Prallventilsitz eingefasst ist, wobei die Stellrichtungsachse im Wesentlichen parallel zur Wirkachse des Elektromagneten ausgerichtet und im axialen Bereich des Eisenkerns, insbesondere koaxial zu dem Eisenkern, angeordnet ist.

Gemäß einer anderen bevorzugten Ausführung der Erfindung umfasst das erste Prallventil auf der Stellrichtungsachse eine (erste) Ventildüse, die von dem ersten Ventilsitz eingefasst ist, wobei die Stellrichtungsachse des ersten Prallventils, insbesondere um wenigstens den Außenradius des Eisenkerns oder wenigstens den Radius der Magnetspule, versetzt zu der Wirkachse der elektromagnetischen Stelleinrichtung, insbesondere des Elektromagneten, angeordnet ist. Alternativ oder zusätzlich kann das zweite Prallventil auf der Stellrichtungsachse, eine (zweite) Ventildüse umfassen, die von dem zweiten Ventilsitz eingefasst ist, wobei die Stellrichtungsachse insbesondere um wenigstens den Außenradius des Eisenkerns oder den Radius der Magnetspule versetzt zu der Wirkachse der elektromagnetischen Stelleinrichtung, insbesondere des Elektromagneten, angeordnet ist. Das Prallventilglied kann bei einer derartigen Ausführung nach Art eines Hebels angelenkt sein und einen Schwenkpunkt aufweisen bezüglich der Wirkachse der elektromagnetischen Stelleinrichtung gegenüber der Ventildüse angeordnet sein kann. Vorzugsweise ist die Stellrichtungsachse der ersten Ventildüse koaxial zu der Stellrichtungsachse der zweiten Ventildüse.

Es sei klar, dass die Erfindung auch ein pneumatisch betriebenes Feldgerät, insbesondere ein Stellgerät, betrifft, das eine erfindungsgemäße Prallventilanordnung aufweist, wobei das Feldgerät ferner einen pneumatischen Aktor, wie einen pneumatischen Stellantrieb, aufweist, der pneumatisch mit dem Steuerluftkanal kommuniziert. Vorzugsweise weist der pneumatische Stellantrieb wenigstens eine pneumatische Arbeitskammer auf, die zum Druckaufbau und/oder zum Druckabsenken nur einen pneumatischen Steuereingang aufweist, wobei dieser eine einzige pneumatische Steuereingang mit dem Steuerluftkanal der elektromagnetischen Prallventilanordnung verbunden ist. Das Feldgerät kann ferner eine pneumatische Druckluftquelle aufweisen, wie einen Drucklufttank, einen Kompressor, eine Versorgungsleitung oder dergleichen, die pneumatisch mit dem Luftversorgungskanal verbunden ist.

Weitere Aspekte der Erfindung sind in den Unteransprüchen angegeben. Weitere Vorteile, Merkmale und Aspekte der Erfindung sind durch die folgende Beschreibung einer bevorzugten Ausführung der Erfindung anhand der beiliegenden Zeichnungen erläutert, in denen zeigen:
- Figur 1: eine erfindungsgemäße elektromagnetische Prallventilanordnung in einer Querschnittsansicht, die die Prallventilanordnung in dem Zustand Druckanhebung zeigt;
- Figur 2: die erfindungsgemäße elektromagnetische Prallventilanordnung gemäß Figur 1 in derselben Querschnittsansicht in dem Zustand Druckabsenkung; und
- Figur 3: die erfindungsgemäße Prallventilanordnung der Figuren 1 und 2 in einem druckkonstanten Haltezustand.

Die in den Figuren dargestellte elektromagnetische Prallventilanordnung ist im Allgemeinen mit der Bezugsziffer 1 versehen. Die elektromagnetische Prallventilanordnung 1 umfasst eine Luftkammer 3, in die ein Luftversorgungskanal 5, ein Steuerluftkanal 7 und ein Entlüftungskanal 9 münden. Die Luftkammer 3 und die Luftkanäle 7, 9 sind in einer Gehäusestruktur 61 eingefasst. Die Gehäusestruktur 61 bewirkt eine Abdichtung der Luftkammer 3 gegenüber der Umgebung, sodass die Luftkammer 3 ausschließlich durch den Luftversorgungskanal 5, den Steuerluftkanal 7 oder den Entlüftungskanal 9 mit pneumatischen Komponenten, wie einen pneumatischen Antrieb, einer pneumatischen Druckluftquelle oder mit der Atmosphäre in fluidischer Verbindung steht.

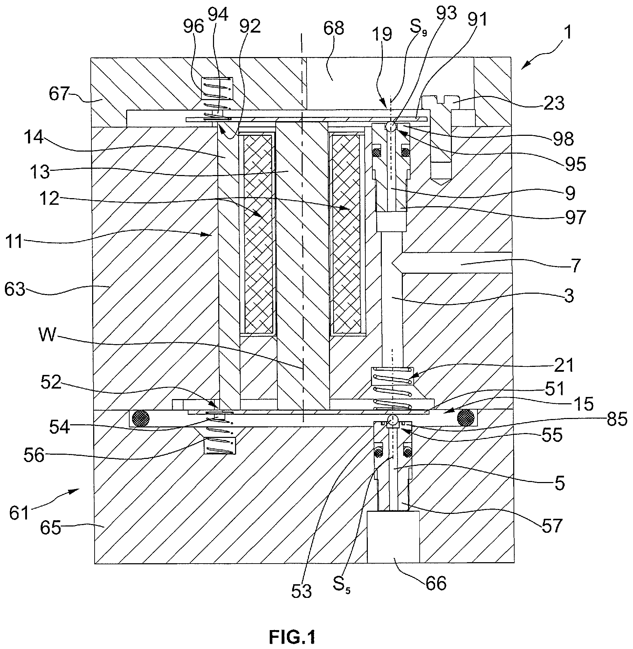

Bei der in den Figuren 1 bis 3 dargestellten bevorzugten Ausführung umfasst die Gehäusestruktur 61 einen Tragabschnitt 63 zum Tragen der Funktionskomponenten der Prallventilanordnung 1, einen Versorgungsabschnitt 65, an dem ein Anschluss 66 für eine pneumatische Druckluftquelle vorgesehen ist und einen Deckelabschnitt 67, an dem eine Öffnung 68 zur Atmosphäre vorgesehen ist. Der Tragabschnitt 63, der Versorgungsabschnitt 65 und der Deckelabschnitt 67 sind, vorzugsweise lösbar, beispielsweise mit einer oder mehreren Schraubverbindungen (nicht dargestellt) miteinander verbunden. Der Versorgungsabschnitt 65 ist abdichtend mit dem Tragabschnitt 63 verbunden. Der Deckelabschnitt 67 kann dichtend oder nicht dichtend mit dem Tragabschnitt 63 verbunden sein. Die Gehäusestruktur 61 ist vorzugsweise nicht-magnetisch und kann insbesondere aus Aluminium, Edelstahl, vorzugsweise austenitischem Edelstahl, und/oder Kunststoff gebildet sein.

Vorzugsweise ist die erfindungsgemäße elektromagnetische Prallventilanordnung als Teil eines pneumatisch betriebenen Feldgeräts, wie eines Stellgeräts, vorgesehen, um die Druckluftversorgung, also das Be- und Entlüften, eines pneumatischen Aktors des Feldgeräts zu steuern. Zu diesem Zweck weist die Prallventilanordnung 1 den Steuerluftkanal 7 auf, der eine fluidische Verbindung zwischen der Luftkammer 3 der Prallventilanordnung und dem (nicht dargestellten) pneumatischen Aktor des Feldgeräts bereitstellt. Der Steuerluftkanal 7 ist zumindest teilweise als Bohrung eines Abschnitts, insbesondere des Tragabschnitts 63, der Gehäusestruktur 61 realisiert. Vorzugsweise ist das Feldgerät, welches die erfindungsgemäße Prallventilanordnung umfasst, dergestalt, dass der pneumatische Aktor ausschließlich über den Steuerluftkanal 7 Druckluft empfangen und abgeben kann.

Zur Versorgung der elektromagnetische Prallventilanordnung 1 mit Druckluft oder pneumatischer Versorgungsluft von einer Druckluftversorgungsquelle, weist die Prallventilanordnung 1 den Luftversorgungskanal 5 auf. Der Druckluftversorgungskanal 5 steht in einer fluidischen Verbindung mit einer Druckluftversorgungsquelle, die beispielsweise durch einen Kompressor, einen Drucklufttank oder Druckluftversorgungsleitungen realisiert sein kann. Der Luftversorgungskanal 5 empfängt Druckluft von der Versorgungsquelle und leitet die Druckluft von der Versorgungsquelle zu der Luftkammer 3. Von der Luftkammer 3 kann die von der Druckluftversorgungsquelle empfangene Druckluft durch den Steuerluftkanal 7 zu dem pneumatischen Aktor des Feldgeräts weitergeleitet werden. Der Druckversorgungskanal 5 kann zumindest abschnittsweise durch eine Bohrung in der Gehäusestruktur 61 realisiert sein. Wenn der pneumatische Aktor des Feldgeräts durch den Steuerluftkanal 7, die Luftkammer 3 und den Luftversorgungskanal 5 fluidisch mit der Druckluftversorgungsquelle verbunden ist, kann der pneumatische Aktor belüftet werden.

Die Prallventilanordnung 1 umfasst ein erstes elektromagnetisches Prallventil 15, das auch als Belüftungsprallventil bezeichnet sein kann, mit dem der Durchflussquerschnitt des Luftversorgungskanals 5 selektiv schließbar ist. In geöffnetem Zustand des Belüftungsprallventils 15 kann Druckluft von der Versorgungsquelle durch den Luftversorgungskanal 5 in die Luftkammer 3 strömen. In geschlossenem Zustand des Belüftungsprallventils ist die Luftkammer 3 gegenüber der Druckluftversorgungsquelle vorzugsweise abdichtend verschlossen.

Die elektromagnetische Prallventilanordnung 1 umfasst ferner ein zweites elektromagnetisches Prallventil 19, das als Entlüftungsprallventil bezeichnet sein kann, mit dem der Entlüftungskanal 9 selektiv schließbar ist. Das Entlüftungsprallventil 19 hat einen geöffneten Zustand, in dem es eine fluidische Verbindung von der Luftkammer 3 zu einer Drucksenke, wie der Atmosphäre, beispielsweise durch die Austrittsöffnung 68, zulässt. In einem geschlossenen Zustand des Entlüftungsprallventils 19 ist die Luftkammer 3 gegenüber der Drucksenke, vorzugsweise der Atmosphäre, abdichtend verschlossen.

Der Entlüftungskanal 9 führt von der Luftkammer 3 in Richtung einer Drucksenke, wie der Atmosphäre. Der Entlüftungskanal 9 kann zumindest abschnittsweise als Bohrung in der Gehäusestruktur 61 realisiert sein. Der pneumatische Aktor des Feldgeräts kann durch den Steuerluftkanal 7, die Luftkammer 3 und den Entlüftungskanal 9 zum Entlüften der Drucksenke fluidisch verbunden werden.

Die Druckluft von der Druckluftversorgungsquelle wird der Prallventilanordnung an dem Luftversorgungskanal 5 mit einem Versorgungsdruck von beispielsweise etwa 20 bar oder weniger, 10 bar oder weniger, 6 bar oder weniger, 2 bar oder 1 bar, bereitgestellt. Mithilfe der elektromagnetischen Prallventilanordnung kann für den pneumatischen Aktor des Feldgeräts ein Steuerdruck bereitgestellt werden, der in dem Bereich zwischen vorzugsweise dem Atmosphärendruck der Drucksenke und dem Versorgungsdruck liegt. Um den Stelldruck für den pneumatischen Aktor zu erhöhen, nimmt das Belüftungsprallventil 15 eine geöffnete Stellung und das Entlüftungsprallventil 19 eine Schließstellung ein, wie in Figur 1 abgebildet.

Die Luftkammer 3, die auch als Steuerluftkammer bezeichnet sein kann, steht vorzugsweise stets in fluidischer Kommunikationsverbindung mit dem pneumatischen Aktor. Wenn, wie in Figur 1 abgebildet, die Prallventilanordnung in einen Druckanhebungszustand gebracht ist, wird die Luftkammer 3 mit Druckluft von der Druckluftversorgungsquelle versorgt und leitet die Druckluft von der Druckluftversorgungsquelle weiter durch den Steuerluftkanal 7. In diesem Druckanhebungszustand wird durch die Prallventilanordnung Luft von der Druckluftversorgungsquelle zu dem pneumatischen Aktor gefördert, sodass für den pneumatischen Aktor zusätzliches Druckluftvolumen und/oder ein steigender Stelldruck bereitgestellt wird. Wenn der pneumatische Aktor beispielsweise ein pneumatischer Stellantrieb mit wenigstens einer pneumatischen Arbeitskammer ist, wird im Druckanhebungszustand durch die Prallventilanordnung 1 das Füllvolumen und der Stelldruck in der Arbeitskammer erhöht, sodass dem pneumatischen Stellantrieb eine erhöhte Stell-Druckkraft bereitgestellt wird, um beispielsweise eine Schließwirkung zu erhöhen oder um mit dem pneumatischen Stellantrieb eine Stellstange oder Stellwelle in eine Wirkrichtung zu bringen.

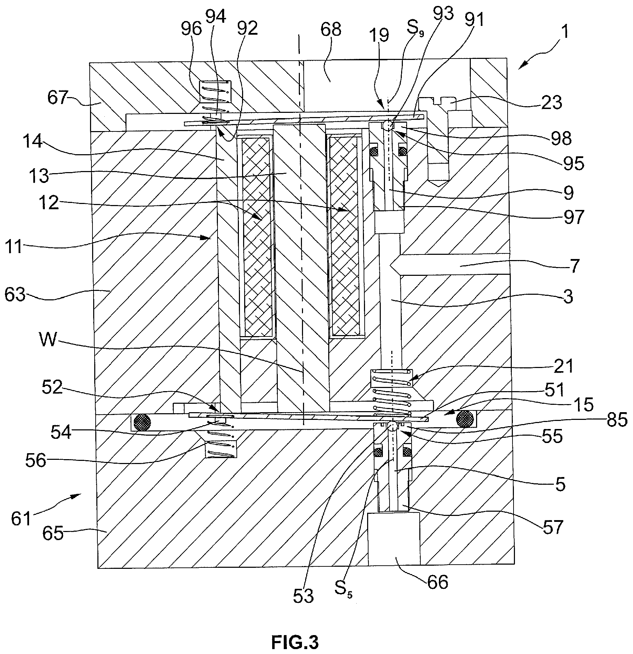

Die elektromagnetische Prallventilanordnung 1 kann insbesondere beim Erreichen eines vorbestimmten Stell-Zustands, beispielsweise eines vorbestimmten Stelldrucks in dem pneumatischen Aktor, eine vorbestimmte Stellposition einer Stellstange oder Stellwelle des Stellgeräts oder dergleichen, dazu angesteuert werden, den vorliegenden Stelldruck konstant zu halten. Die Prallventilanordnung 1 kann in einen Druckkonstanz-Zustand verbracht werden, der beispielsweis in Figur 3 dargestellt ist, bei dem sowohl das erste elektromagnetische Prall ventil 15 als auch das zweite elektromagnetische Prallventil 19 geschlossen sind. In dem Druckkonstanz-Zustand kann aus der Luftkammer 3 weder Druckluft durch den Entlüftungskanal 9 entweichen, noch kann in diesem Zustand zusätzliche Versorgungsluft durch den Steuerluftkanal 7 in die Luftkammer 3 einströmen. Sofern ausgangsseitig des Steuerluftkanals 7 in und an dem mit dem Steuerluftkanal 7 verbundenen pneumatischen Aktor konstante Betriebsbedingungen des Feldgeräts vorherrschen und keine Leckage vorliegt, bleibt der Druck in dem pneumatischen Aktor, dem Steuerluftkanal 7 und der Luftkammer 3, konstant. Ein pneumatischer Stellantrieb kann durch Vorhalten eines konstanten Stelldrucks eine konstante Stellkraft und/oder eine konstante Stellposition realisieren.

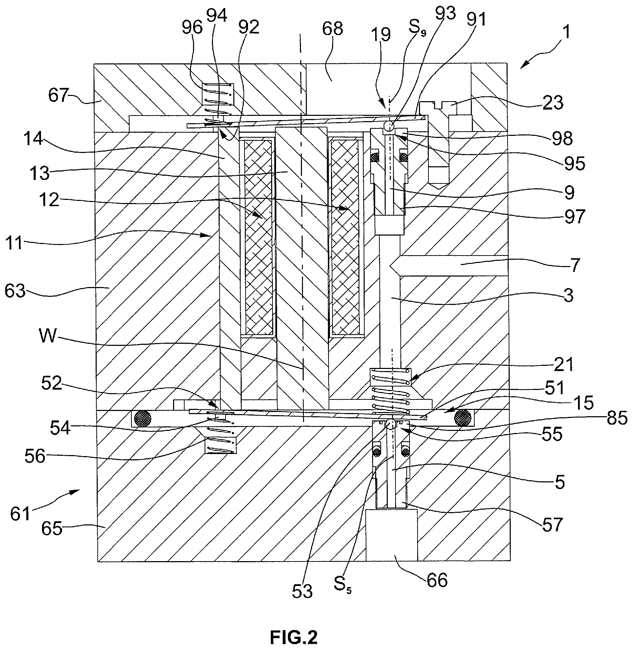

Wird das Entlüftungsventil 19 geöffnet, wie in Figur 2 dargestellt, nimmt die Prallventilanordnung einen Drucksenkungszustand ein. In dem Drucksenkungszustand der Prallventilanordnung wird der mit dem Steuerluftkanal 7 verbundene pneumatische Aktor über die Luftkammer 3 und den offenen Entlüftungskanal 9 zu der Drucksenke, insbesondere der Atmosphäre, hin entlüftet. Mit einer Reduktion des Stelldrucks in der Luftkammer 3 und in dem Steuerluftkanal 7 an dem pneumatischen Aktor wird die Stellkraft des pneumatischen Aktors verringert und/oder die Stellposition eines Stellglieds des pneumatischen Aktors entgegen der oben genannten Stellrichtung geändert, beispielsweise die Öffnungsweite eines Stellventils erhöht.

Das Belüftungsprallventil 15 umfasst einen Prallventilsitz 55, der eine Ventildüse des Belüftungskanals 5 einfasst und ein bewegliches Prallventilglied, das bevorzugt als Prallplatte 51 realisiert ist, welches den Prallventilsitz 55 positionsabhängig entweder vorzugsweise abdichtend verschließt oder für einen Luftdurchlass freigeben kann. Zusätzlich zu der Prallplatte 51 oder anstelle der Prallplatte 51 kann das Prallventil 15 ein Verschlusselement, beispielsweise eine Verschlusskugel 53, aufweisen.

Bei dem Belüftungsprallventil 15 ist die Prallplatte 51 um ein Auflager 52 schwenkbar gelagert. Das Auflager 52 kann beispielsweise durch eine ebene Auflagefläche mit einer Randkante gebildet sein, die die Schwenkachse der Prallplatte 51 definiert. Die Prallplatte 51 ist vorzugsweise um eine Schwenkachse des Auflagers 52 schwenkbar. Das Auflager 52 kann als Ausgleichsmittel, wie eine bezüglich der Schwenkachse drehmomentfrei auf die Prallplatte 51 wirkende Haltefeder 56, ausgestaltet sein. Die Feder 56 drückt die Prallplatte 51 gegen die Auflagefläche und die Schwenkkante des Auflagers 52. Das Auflager 52 kann eine Sicherung, beispielsweise in Form eines
Sicherungsstifts 54, aufweisen, um ein Verschieben in Quer- oder Längsrichtung der Prallplatte 51 und ein Verlieren der Prallplatte zu verhindern. Die Prallplatte kann zumindest teilweise magnetisierbar sein, beispielsweise aus weichmagnetischem (bzw. ferromagnetischen) Stahlblech bestehen oder zumindest einen weichmagnetischen Anteil aufweisen. Der weichmagnetische oder ferromagnetische Anteil des beweglichen Prallventilgliedes 51 wird von dem aktivierten Elektromagneten 11 zu dem Eisenkern 13 hin angezogen. Der Eisenkern 13 wirkt für das Prallventilglied 51 als Wegbegrenzung in Richtung der Öffnungsstellung des Belüftungsventils.

Das Prallventil 15 weist eine Schließkugel 53 auf, die von einer Schließbewegung des Prallventilglieds 15 mitgenommen wird. Die Schließkugel 53 des Prallventils 15 kann in einen ringartigen Berührkontakt mit dem Prallventilsitz 55 gebracht werden, sodass die Schließkugel 53 den Belüftungskanal 5 abdichtend verschließt. Die Schließkugel 53 kann zumindest teilweise aus einem weichmagnetischen, beispielsweise ferromagnetischen Material bestehen. Vorzugsweise ist die Schließkugel 53 aus einem härteren Material als das Material des Prallventilsitzes 55 gefertigt, beispielsweise aus gehärtetem Stahl oder Keramik.

Das Belüftungsventil 15 ist mit einem Zwangsmittel in Form einer Feder 21 ausgestattet, die das Prallventilglied, hier die Prallplatte 51 mit der Schließkugel 53, in eine Schließstellung drängt, sodass bei unbetätigtem Belüftungsventil, beispielsweise in einem stromlosen Zustand der elektromagnetischen Stelleinrichtung 11, das Belüftungsventil 15 geschlossen ist. Die Schließkraft der Feder 21 ist vorzugsweise auf den Versorgungsluftdruck derart abgestimmt, dass bei maximaler Druckdifferenz an dem ersten Prallventil 15 eine sichere Schließwirkung erreicht wird (also wenn die Luftkammer 3 zu der Drucksenke hin geöffnet und gegenüber der Druckluftversorgungsquelle verschlossen ist), wobei die Schließkraft der Feder 21 höchstens so groß ist, dass die elektromagnetische Stelleinrichtung 11 auch bei minimaler Druckdifferenz an dem ersten Prallventil 15 (also wenn in der Luftkammer 3 derselbe oder nahezu derselbe Druck herrscht, wie der, den die Druckluftversorgungsquelle bereitstellt) die elektromagnetische Stelleinrichtung 11 das erste Prallventil 15 sicher öffnen kann.

Bei der erfindungsgemäßen elektromagnetischen Prallventilanordnung 1 ist entsprechend deren Benennung eine elektromagnetische Stelleinrichtung 11 zum Betätigen des ersten Prallventils 15 vorgesehen. Die elektromagnetische Stelleinrichtung 11 umfasst eine Magnetspule 12, einen Eisenkern 13 und einen Anker bzw. ein Joch 14. Die Magnetspule 12 ist hohlzylinderartig um den Eisenkern 13 angeordnet. Der Eisenkern 13 und die Magnetspule 12 sind koaxial zueinander angeordnet und definieren die Wirkachse W des Elektromagneten 11. Bezüglich der Wirkachse W radial außerhalb des von der Magnetspule 12 geformten Zylinders ist ein Anker 14 angeordnet. Dieser Anker 14 bildet das Auflager 52 der zumindest teilweise magnetischen Prallventilplatte 51. Bezüglich der Wirkachse W gegenüber dem Anker 14 ist das erste Prallventil 15 angeordnet.

Die Stellrichtungsachse S₅ des Belüftungsprallventils 15 verläuft parallel zu der Wirkachse W des Elektromagneten 11. Die Stellrichtungsachse S₅ ist durch den Verlauf des Belüftungskanals 5 im Bereich des Belüftungsventils 15 bzw. durch die axiale Bewegungsrichtung der Schließkugel 53 gegenüber dem Ventilsitz 55 definiert.

In dem in Figur 1 dargestellten Druckanhebungszustand der Prallventilanordnung 1 ist der Elektromagnet 11 zum Öffnen des Belüftungsventils 15 angesteuert. Zum Öffnen des ersten Prallventils 15 wird die elektromagnetische Stelleinrichtung 11 bestromt, sodass auf die Prallventilplatte 51 eine magnetische Kraft wirkt, um die Prallventilplatte 51 von dem Ventilsitz 55 in Axialrichtung S₅ zu entfernen. Zum Öffnen des Belüftungsprallventils 15 überwindet die Stelleinrichtung 11 die Schließkraft der Feder 21. Die Feder 21 stützt sich innerhalb der Luftkammer 3 gegen die Gehäusestruktur 61 auf der einen Seite und gegen das Prallventilglied 51 auf der anderen Seite ab.

Figur 3 zeigt den Haltezustand oder Druckkonstanz-Zustand der Prallventilanordnung 1. In diesem Zustand wird die Magnetspule 12 zum Schließen des Belüftungsprallventils 15 angesteuert. Zum Schließen des Belüftungsprallventils 15 kann die Magnetspule 12 beispielsweise stromlos geschaltet sein oder nur eine geringfügige elektrische Energie kleiner als einen Belüftungsventil-Öffnungs-Schwellenwert empfangen. Die Schließkraft der Feder 21 übersteigt in dem Druckkonstanz-Zustand der Ventilanordnung die Versorgungs-Druckkraft an dem Belüftungsventil 15 zuzüglich einer eventuell durch die elektromagnetische Stelleinrichtung 11 auf das bewegliche Prallventilglied 51 ausgeübten magnetischen Stellkraft. Wenn die Haltefeder 56 des Auflagers 52 bezüglich der Schwenkachse des Auflagers 52 drehmomentneutral auf das bewegliche Prallventilglied 51 wirkt, hat die Haltefeder 56 praktisch keine Auswirkung auf den Öffnungs- und/oder Schließ-Zustand des Belüftungsprallventils 15.

Der Düsendurchmesser an dem Ventilsitz 55 kann etwa 0,8 mm betragen und der Durchmesser der Schließkugel 53 etwa 1,0 mm. Das Belüftungsprallventil 15 weist einen vorzugsweise in die Gehäusestruktur 61 einschraubbaren Düseneinsatz 57 auf, der vorzugsweise abdichtend mit der Gehäusestruktur 61 verbindbar, vorzugsweise einschraubbar, ist. Der Düseneinsatz 57 bildet vorzugsweise koaxial zumindest einen Abschnitt des Belüftungskanals 5 aus. Am luftkammerseitigen Ende weist der Düseneinsatz 57 einen Ventilsitz 55 zum Öffnen und Schließen und Zusammenwirken mit dem Prallventilglied 51 auf. In Axialrichtung S₅ von dem Prallventilsitz 55 des Düseneinsatzes 57 in Richtung der Luftkammer 3 vorstehend kann eine zylinderhülsenartige Führung für die Schließkugel 53 vorgesehen sein. Es sei klar, dass eine Führung für die Schließkugel 53 auch separat von einem Düseneinsatz 57 oder, falls kein Düseneinsatz 57 eingesetzt wird, durch ein anderes Bauteil oder durch einen Teil der Gehäusestruktur 61 gebildet sein kann. Der Führungsabschnitt 58 verhindert ein Entweichen der Schließkugel 53 von der Ventilachse S₅ in Radialrichtung. Der Führungsabschnitt 58 kann insofern auch als Käfigabschnitt bezeichnet sein. Es sei klar, dass ein Schließkörper auch eine andere Form als eine Kugelform aufweisen kann. Schließkörper können beispielsweise kegelförmig, kegelabschnittsförmig oder zylindrisch sein. Anstelle eines losen Schließkörpers, wie die Schließkugel 53, kann auch ein Verschlusselement 53 vorgesehen sein, das fest, insbesondere drehfest, mit dem beweglichen Prallventilglied, wie der Prallplatte 51, verbunden ist. Die bevorzugte Kugelform des Verschlusselements 53 eignet sich insbesondere in Zusammenwirkung mit einem kreisförmigen von dem Ventilsitz 55 eingefassten Düsenabschnitt besonders gut für ein dichtendes Verschließen des Ventils. Die Axialführung 58 weist einen größeren Innendurchmesser auf als den Außendurchmesser des Schließgliedes 53, damit zwischen dem Außenumfang des Verschlusselements 53 und dem Innenumfang der Axialführung 58 pneumatische Versorgungsluft aus dem Prallventil 15 strömen kann.

Vorzugsweise ist der Radialabstand oder -spalt kleiner als 2 mm, vorzugsweise kleiner als 1 mm, 0,5 mm oder 0,2 mm.

Das Belüftungsventil 15 ist an der Mündung des Belüftungskanals 5 zu dem Steuerluftkanal 3 angeordnet. Das Entlüftungsventil 19 ist an der ausgangsseitigen Mündung des Entlüftungskanals 9 angeordnet. Vorzugsweise kann das Entlüftungsventil strukturell, mechanisch, pneumatisch und/oder elektromagnetisch entsprechend dem Belüftungsventil 15 ausgebaut sein. Einander entsprechende Komponenten des Belüftungsventils 15 und des Entlüftungsventils 19 sind mit einander ähnlichen Bezugszeichen versehen, die bei Komponenten des Belüftungsventils 15 mit der Ziffer 5 und die des Entlüftungsventils 19 mit der Ziffer 9 beginnen. Im Allgemeinen werden die Komponenten des Belüftungsventils 15 bzw. ersten Prallventils 15 als "erste" Komponente bezeichnet und die Komponenten des Entlüftungsventils oder zweiten Prallventils 19 als "zweite" Komponente bezeichnet. Es ist auch denkbar, dass das erste Prallventil 15 und das zweite Prallventil 19 strukturell, mechanisch, pneumatisch und/oder elektromagnetisch unterschiedlich zueinander realisiert sind.

Das Entlüftungsprallventil 19 weist ein Prallventilglied 91 auf, das sich in Richtung der Achse S₅ der von dem zweiten Prallventil 95 eingefassten Prallventildüse bewegen kann. Das Prallventilglied kann als schwenkbare Prallplatte 91 realisiert sein. Das Prallventilglied 91 wirkt vorzugsweise mit einem Verschlusselement 93, beispielsweise einer Schließkugel, zum Verschließen des Querschnitts des Entlüftungskanals 9 zusammen. Die Prallplatte 91 ist um eine durch eine Auflage 92 definierte Schwenkachse drehbar, die vorzugsweise durch die Randkante des Ankers 14 der elektropneumatischen Stelleinrichtung 11 realisiert ist. Die Schwenklagerung 92 der Prallplatte 91 kann mit einem Führungsstift 94 und/oder einer Haltefeder 96, wie oben beschrieben, gesichert sein. Es ist denkbar, dass die Haltefeder 96 des Entlüftungsprallventils 19 gegenüber der Schwenkachse des Auflagers 92 versetzt angeordnet ist, sodass die Haltefeder eine (geringfügige) Vorspannung in Richtung des geöffneten Zustands des Entlüftungsprallventils 19 bewirkt. Die Auflegefläche des Auflagers 92, welche bevorzugt durch eine Oberfläche des elektromagnetischen Jochs 14 bereitgestellt ist, ist vorzugsweise plan zu einer stirnseitigen Oberfläche des Eisenkerns 13 angeordnet, sodass in der aktivierten Stellung des Elektromagneten 11 und des Entlüftungsprallventils 19 die Prallplatte 91 flach auf dem Joch 14 und dem Eisenkern 13 aufliegt. Der zumindest teilweise weichmagnetische, insbesondere ferromagnetische Prallplattenkörper kann einen Magnetschluss bilden, sodass sich der Energieverbrauch verringert. Die andere Stirnseite des Eisenkerns 13 ist vorzugsweise plan und fluchtend zu der Auflagefläche des Auflagers 52 angeordnet, damit die Prallplatte 51 ebenfalls einen Magnetschluss bilden kann.

In Figur 1 ist das Entlüftungsprallventil 19 in Schließstellung abgebildet. In der Schließstellung des Prallventils 19 ist der Ventilsitz 95 durch das Prallventilglied 91 insbesondere mithilfe des kugelförmigen Verschlusselements 93 abdichtend verschlossen.

In dem in Figur 2 dargestellten Druckabbau-Zustand der erfindungsgemäßen elektromagnetischen Prallventilanordnung ist das Entlüftungsprallventil 19 geöffnet. Wenn das Entlüftungsprallventil 19 geöffnet ist, kann Druckluft aus dem pneumatischen Aktor durch den Steuerluftkanal 7, die Luftkammer 3 und den Entlüftungskanal 9 zur Drucksenke hin entweichen. Das Prallventilglied 91 kann beispielsweise durch die Druckkraft zwischen dem Luftdruck zwischen dem in der Luftkammer 3 und dem drucksenkungsseitigen Luftdruck und/oder durch eine Vorspannung, beispielsweise durch eine Feder, wie die Haltefeder 96, in den geöffneten Zustand gemäß Figur 2 gedrängt werden. Das Prallventilglied 91 sowie gegebenenfalls der Schließkörper 93 geben den Ventilsitz 95 des Entlüftungsprallventils 19 frei. An der Gehäusestruktur 61 ist ein Anschlag beispielsweise in Form einer Anschlagsschraube 23 einstellbar festgelegt, der den Stellweg des Prallventilglieds 91 auf ein zulässiges Maximum beschränkt.

Wenn das Entlüftungsprallventil 19 eine Schließkugel 93 aufweist, umfasst es zur axialen Führung entlang der Stellrichtungsachse S₉ eine Führung 98, die ein Entweichen des Verschlusselements 93 in Radialrichtung verhindert. Das Entlüftungsprallventil 19 kann einen Ventileinsatz 97 aufweisen, der vorzugsweise baugleich zu einem Ventileinsatz 57 des Belüftungsstellventils 15 dimensioniert ist. Durch die Verwendung baugleicher Düsen- bzw. Ventileinsätze 57, 97, insbesondere mit identischen Maßen für den jeweiligen Luftkanal 5, 9, den jeweiligen Ventilsitz 55, 95 und/oder gegebenenfalls das jeweilige Verschlusselement 53, 93, kann eine pneumatische Identität der beiden Ventile 15, 19 bewirkt werden. Falls ein unterschiedliches pneumatisches Verhalten gewünscht ist, können unterschiedliche Einsätze 57, 97 verwendet werden, beispielsweise mit unterschiedlichem Luftkanalquerschnitt.

Vorzugsweise ist das Entlüftungsprallventil 19 relativ zu dem Belüftungsprallventil 15 derart angeordnet, dass die erste Stellrichtungsachse S₅ und die zweite Stellrichtungsachse S₉ koaxial verlaufen. Die Stellrichtungsachse S₉ des zweiten Prallventils 19 kann bezogen auf die Wirkachse W der elektromagnetischen Stelleinrichtung 11 in Radialrichtung außerhalb des durch den Eisenkern 13 und vorzugsweise außerhalb des durch die Magnetspule 12 definierten Zylinderbereichs angeordnet sein. Alternativ kann es bevorzugt sein, dass die Stellrichtungsachse S₉ des zweiten Prallventils 19 koaxial zu der Wirkachse W des Elektromagneten 11 verläuft (nicht dargestellt). Beispielsweise könnte das Belüftungsventil 19, insbesondere ein Ventileinsatz 97, in den Eisenkern 13 der elektromagnetischen Stelleinrichtung 11 eingebracht sein.

Die beiden Prallventile 15, 19 der elektromagnetischen Prallventilanordnung 1 sind unter Berücksichtigung des Versorgungsdruckes von der Versorgungsdruckluftquelle pneumatisch, mechanisch und elektromagnetisch derart dimensioniert, dass die Prallventilanordnung die Zustände Druckanhebung, Druckkonstanz und Druckabsenkung einnehmen kann. Die elektromagnetische Schließkraft zum abdichtenden Schließen des Entlüftungsprallventils 19 ist vorzugsweise zumindest geringfügig kleiner als die erforderliche elektromagnetische Öffnungskraft zum Öffnen des Belüftungsprallventils 15. Die elektromagnetische Stelleinrichtung 11 kann beispielsweise stromlos oder mit einem Magnetsteuerstrom, der unterhalb des Entlüftungsschwellenwerts liegt, in dem in Figur 2 dargestellten Druckabsenkungszustand angesteuert werden. Indem die elektromagnetische Stelleinrichtung 11 mit einem Magnetsteuerstrom betätigt wird, der Oberhalb des Entlüftungs-Schwellenwerts aber unterhalb des Belüftungs-Schwellenwerts liegt, kann der Druckkonstanz-Zustand bewirkt werden, in dem von dem Elektromagneten 11 eine Stellkraft bereitgestellt wird, die einerseits groß genug ist, um das Entlüftungsventil 19 zu schließen, vorzugsweise selbst dann, wenn in dem pneumatischen Aktor bzw. dem Steuerkanal 7 der Steuerluft 3 der maximal verfügbare Versorgungdruck der Versorgungsdruckluftquelle vorherrscht, zu schließen. In diesem in Figur 3 dargestellten Druckkonstanz-Zustand liegt an dem Elektromagneten 11 ferner ein hinreichend niedriger Magnetsteuerstrom an, sodass das Belüftungsprallventil 15 in der geschlossenen Stellung belassen wird.

Bei pneumatisch und elektromagnetisch gleichdimensioniertem ersten und zweiten Prallventil 15, 19 kann es das Zwangsmittel 21 sein, welches die Steuerkraftdifferenz bewirkt. Es ist auch denkbar, die elektromagnetische Stelleinrichtung 11 und die beiden Prallventile 15, 19 elektromagnetisch derart zu dimensionieren, dass derselbe auf die elektromagnetische Stelleinrichtung 11 wirkende Magnetsteuerstrom unterschiedlich magnetische Stellkräfte bezüglich der unterschiedlichen Prallventile 15, 19 zur Folge hat. Es ist auch denkbar, dass, beispielsweise durch unterschiedliche Hebellängen der Prallplatten 51, 91, eine unterschiedliche mechanische Dimensionierung der beiden Prallventile 15, 19 erfolgt, die bei demselben Magnetsteuerstrom unterschiedliche Schließkräfte abhängig von der jeweiligen Hebellänge der jeweiligen Prallplatte 51, 91 auf den jeweiligen Prallventilsitz 55, 95 (und gegebenenfalls des jeweiligen Verschlusselements 53, 93) wirken lässt. Es ist auch denkbar, die Prallventile 15, 19 pneumatisch unterschiedlich zu dimensionieren, sodass unterschiedliche effektive Druckkraftquerschnitte an dem jeweiligen Ventilsitz 55, 95 gebildet sind, entsprechend der Formel F_{P} = Q x Δₚ (wobei F_{P} die Druckkraft, Q den jeweiligen effektiven pneumatischen Querschnitt des Ventils und Δₚ die Druckdifferenz an dem jeweiligen Ventil bezeichnet). Bei Anliegen derselben Druckdifferenz können aufgrund unterschiedlich groß bemessener pneumatischer Ventilquerschnitte Q unterschiedliche Druckkräfte Fp an dem jeweiligen Prallventil 15, 19 anliegen. Kombinationen der gleichen und/oder unterschiedlicher Dimensionierungen der beiden Prallventile 15, 19 sind möglich. Bevorzugt sind die Prallventile 15, 19 wie abgebildet elektromagnetisch und pneumatisch gleich dimensioniert.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Prallventilanordnung
- 3: Luftkammer
- 5, 7, 9: Luftkanal
- 11: Stelleinrichtung
- 12: Magnetspule
- 13: Eisenkern
- 14: Anker
- 15, 19: Prallventil
- 23: Anschlags-Stellschraube
- 51, 91: Prallplatte
- 53, 93: Verschlusselement
- 55, 95: Prallventilsitz

- S₅, S₉: Stellrichtungsachse
- W: Wirkachse

## Patentansprüche

1. Pneumatisch betriebenes Feldgerät, das einen pneumatischen Aktor, eine pneumatische Druckluftquelle, und eine elektromagnetische Prallplattenventilanordnung (1) aufweist, letztere umfassend eine Luftkammer (3), in die drei Luftkanäle (5, 7, 9) des Feldgeräts münden, wobei die drei Luftkanäle
- einen Luftversorgungskanal (5) zum Empfangen von Druckluft von der Druckluftversorgungsquelle,
- einen Steuerluftkanal (7) zum Be- und Entlüften des pneumatischen Aktors des Feldgeräts und
- einen Entlüftungskanal (9), der von der Luftkammer (3) in Richtung einer Drucksenke führt, zum Abgeben von Druckluft an die Drucksenke, wie die Atmosphäre umfassen, wobei der Aktor mit dem Steuerluftkanal (7) kommuniziert und wobei die pneumatische Druckluftquelle pneumatisch mit dem Luftversorgungskanal (5) verbunden ist;
**dadurch gekennzeichnet, dass**
die Prallplattenventilanordnung ein erstes elektromagnetisches Prallventil (15) zum Öffnen und/oder Schließen des Luftversorgungskanals (5) und
ein zweites elektromagnetisches Prallventil (19) zum Öffnen und/oder Schließen des Entlüftungskanals (9) aufweist, die derart aufeinander abgestimmt sind, dass der Luftversorgungskanal (5) und der Entlüftungskanal (9) gleichzeitig schließbar sind, wobei das erste Prallventil (15) stromlos geschlossen und das zweite Prallventil (19) stromlos offen ist.

2. Feldgerät nach Anspruch 1, **dadurch gekennzeichnet, dass** das erste Prallventil (15) und das zweite Prallventil (19) derart aufeinander abgestimmt sind, dass
das zweite Prallventil (19) schließt bevor das erste Prallventil (15) öffnet; und dass das erste Prallventil (15) schließt bevor das zweite Prallventil (19) öffnet.

3. Feldgerät nach Anspruch 2, **dadurch**
**gekennzeichnet, dass** ein Umschalten zwischen einem Druckanhebungszustand, in dem das zweite elektromagnetische Prallventil (19) geschlossen und das erste elektromagnetische Prallventil (15) geöffnet ist, sodass eine pneumatische Kommunikationsverbindung von der Druckluftversorgungsquelle zu dem pneumatischen Aktor bereitgestellt ist, in den Druckabsenkungszustand, in dem das erste elektromagnetische Prallventil (15) geschlossen ist und in dem das zweite elektromagnetische Prallventil (19) geöffnet ist, sodass eine pneumatische Kommunikationsverbindung von dem pneumatischen Aktor zu der Drucksenke vorliegt, stets derart erfolgt, dass ein Übergang über den Druckkonstanz-Zustand der elektromagnetischen Prallventilanordnung eintritt, bei dem sowohl das erste elektromagnetische Prallventil (15) als auch das zweite elektromagnetische Prallventil (19) geschlossen sind.

4. Feldgerät nach Anspruch 1, 2 oder 3, **dadurch**
**gekennzeichnet, dass** das erste Prallventil (15) umfasst:
- ein Prallventilglied, wie eine Prallplatte (51);
- eine elektromagnetische Stelleinrichtung (11), die das Prallventilglied zum Öffnen und/oder Schließen des Versorgungsluftkanals (5) in einer axialen Stellrichtung (S₅) verlagert;
- ein Zwangsmittel, das das Prallventilglied in der axialen Stellrichtung (S₅) in eine Schließstellung zum Abschließen des Versorgungsluftkanals (5) zwingt.

5. Feldgerät nach Anspruch 4, **dadurch gekennzeichnet, dass** mit dem ersten Prallventil (15) ein vorbestimmter Steuerdruck in der Luftkammer (3) und/oder dem Steuerluftkanal (7) abhängig von einem Steuerstrom der elektromagnetischen Stelleinrichtung (11) einstellbar ist.

6. Feldgerät nach einem der vorstehenden Ansprüche, **dadurch gekennzeichnet, dass** das erste Prallventil (15) und das zweite Prallventil (19) elektromagnetisch mit einander gekoppelt sind, wobei insbesondere die selbe Magnetspule (12), derselbe Eisenkern (13) und/oder derselbe Anker (14) in elektromagnetischer Wirkverbindung mit dem ersten Prallventil (15) und dem zweiten Prallventil (19) stehen.

7. Feldgerät nach einem der vorstehenden Ansprüche, **dadurch gekennzeichnet, dass** das erste Prallventil (15) und das zweite Prallventil (19) elektromagnetisch derart gleich dimensioniert sind, dass an dem ersten Prallventil (15) und dem zweiten Prallventil (19) bei Anlegen des selben Magnetsteuerstroms im Wesentlichen gleichgroße magnetische Kräfte wirken.

8. Feldgerät nach einem der vorstehenden Ansprüche, **dadurch gekennzeichnet, dass** das erste Prallventil (15) und das zweite Prallventil (19) pneumatisch derart gleich dimensioniert sind, dass bei Anliegen der selben Druckdifferenz an dem jeweiligen Prallventil (15, 19) im Wesentlichen gleichgroße pneumatische Druckkräfte auf die Prallventilglieder der Prallventile wirken.

9. Feldgerät nach einem der vorstehenden Ansprüche, **dadurch gekennzeichnet,** das das erste Prallventil (15) und/oder das zweite Prallventil (19) ein auf der Stellrichtungsachse (S₅, S₉) liegendes Verschlusselement (53, 93) umfasst, das zum Verschließen des jeweiligen Luftkanals (5, 9) mit einer von dem jeweiligen Prallventilsitz (55, 95) eingefassten Ventildüse des jeweiligen Luftkanals (5, 9) derart in Eingriff kommt, dass das Prallventilglied in einem umlaufenden Axialabstand zur Ventildüse angeordnet ist.

10. Feldgerät nach einem der vorstehenden Ansprüche, **dadurch gekennzeichnet, dass** das zweite Prallventil (19) umfasst:
- ein Prallventilglied;
- eine elektromagnetische Stelleinrichtung (11), die das Prallventilglied zum Öffnen und/oder Schließen des Entlüftungskanals (9) in einer axialen Stellrichtung (S₉) verlagert;
- ein in der axialen Stellrichtung (S₉) gegenüber dem Prallventilsitz (95) angeordnetes mechanisches Widerlager, das eine maximale axiale Wegstrecke des Prallventilglieds begrenzt.

11. Feldgerät nach einem der vorstehenden Ansprüche, **dadurch gekennzeichnet, dass** das erste Prallventil (15) und/oder das zweite Prallventil (19) auf der Stellrichtungsachse (S₅, S₉) eine Ventildüse umfasst, die von dem jeweiligen Prallventilsitz (55, 95) eingefasst ist, wobei die Stellrichtungsachse (S₅, S₉) im Wesentlichen parallel zur Wirkachse (W) des Elektromagneten (11) ausgerichtet und im Bereich des Eisenkerns (14) angeordnet ist.

12. Feldgerät nach einem der Ansprüche 1 bis 10, dadurch
**gekennzchnet**, dass das erste Prallventil (15) und/oder das zweite Prallventil (19) auf der Stellrichtungsachse (S₅, S₉) eine Ventildüse umfasst, die von dem jeweiligen Ventilsitz (55, 95) eingefasst ist, wobei die Stellrichtungsachse (S₅, S₉) um wenigstens den Außenradius des Eisenkerns (14) oder den Radius der Magnetspule (12) versetzt zu der Wirkachse (W) des Elektromagneten (11) angeordnet ist.

13. Feldgerät nach einem der Ansprüche 1 bis 12, **dadurch gekennzeichnet, dass** das zweite elektromagnetische Prallventil (19) einen geöffneten Zustand hat, in dem es eine fluidische Verbindung von der Luftkammer (3) zu einer Drucksenke durch eine Austrittsöffnung (68), zulässt.

## Claims

1. Pneumatically operated field device, comprising a pneumatic actuator, a pneumatic compressed air supply source, and an electromagnetic impact plate valve arrangement (1), the latter comprising
an air chamber (3), into which three air conduits (5, 7, 9) of the field device lead, wherein the three air conduits comprise
- an air supply conduit (5) for receiving compressed air from the compressed air supply source,
- a control air conduit (7) for aerating and venting a pneumatic actuator of the field device, and
- a venting conduit (9) for outputting compressed air to a pressure sink, such as the atmosphere;
wherein the actuator communicates with the control air conduit (7) and wherein the pneumatic compressed air source is pneumatically connected with the air supply conduit (5),
**characterized in that**
the impact plate valve arrangement comprises a first electromagnetic impact valve (15) for opening and/or closing the air supply conduit (5) and
a second electromagnetic impact valve (19) for opening and/or closing the venting conduit (9), which are attuned in such a way that the air supply conduit (5) and the ventilation conduit (9) are closeable at the same time the first impact valve (15) is closed in the absence of current and the second impact valve (19) is open in the absence of current.

2. Field device according to claim 1, **characterized in that** the first impact valve (15) and the second impact valve (19) are attuned in such a way that
the second impact valve (19) closes before the first impact valve (15) opens; and that
the first impact valve (15) closes before the second impact valve (19) opens.

3. Field device according to claim 2, **characterized by** a switchover between a pressure increase state, in which the second electromagnetic impact valve (19) is closed and the first electromagnetic impact valve (15) is open, so that a pneumatic communication connection from the compressed air supply source to the pneumatic actuator is provided, into the pressure reduction state, in which the first electromagnetic impact valve is closed (15) and in which the second electromagnetic impact valve (19) is open, so that a pneumatic communication connection from the pneumatic actuator to the pressure sink is provided, always occurs in such a way that a transition occurs via the pressure constancy state of the electromagnetic impact valve arrangement, in which both the first first electromagnetic impact valve (15) and the second electromagnetic impact valve (19) are closed.

4. Field device according to claim 1 or 2, **characterized in that** the first impact valve (15) comprises:
- an impact valve member, such as an baffle plate (51);
- an electromagnetic control device (11), which displaces the impact valve member to open and/or close the supply air conduit (5) in an axial control direction (S₅);
- a biasing member, which forces the impact valve member in the axial control direction (S₅) into a closed position for closing the supply air conduit (5).

5. Field device according to claim 3,
**characterized in that** a predetermined control pressure in the air chamber (3) and/or the control air conduit (7) can be adjusted by means of the first impact valve (15), as a function of a control current of the electromagnetic control device (11).

6. Field device according to one of the preceding claims, **characterized in that** the first impact valve (15) and the second impact valve (19) are electromagnetically coupled to one another, wherein in particular the same magnetic coil (12), the same iron core (13) and/or the same armature (14) are in electromagnetic operative connection with the first impact valve (15) and the second impact valve (19).

7. Field device according to one of the preceding claims, **characterized in that** the first impact valve (15) and the second impact valve (19) are electromagnetically dimensioned identically in such a way that substantially identical magnetic forces act on the first impact valve (15) and on the second impact valve (19) when applying the same magnetic control current.

8. Field device according to one of the preceding claims, **characterized in that** the first impact valve (15) and the second impact valve (19) are pneumatically dimensioned identically in such a way that when the same pressure difference applies on the respective impact valve (15, 19), substantially identical pneumatic compressive forces act on the respective impact valve members of each of the impact valves.

9. Field device according to one of the preceding claims, **characterized in that** the first impact valve (15) and/or the second impact valve (19) comprises a respective closing body (53, 93), which is located on the positioning direction axis (S₅, S₉) and which, for closing the respective air conduit (5, 9), engages with a valve nozzle of the respective air conduit (5, 9) encompassed by the respective impact valve seat (55, 95) in such a way that the impact valve member is arranged at a circumferential axial distance to the valve nozzle.

10. Field device according to one of the preceding claims, **characterized in that** the second impact valve (19) comprises:
- an impact valve member;
- an electromagnetic control device (11), which displaces the impact valve member to open and/or to close the venting conduit (9) in an axial control direction (S₉);
- a mechanical abutment which is arranged in the axial control direction (S₉) opposite the impact valve seat (95) and which limits a maximum axial travel range of the impact valve member.

11. Field device according to one of the preceding claims, **characterized in that** the first impact valve (15) and/or the second impact valve (19) comprises a valve nozzle on the control direction axis (S₅, S₉), the valve nozzle being encompassed by the respective impact valve seat (55, 95), wherein the control direction axis (S₅, S₉) is oriented substantially parallel to the effective axis (W) of the electromagnet (11) and is arranged in the area of the iron core (14).

12. Field device according to one of claims 1 to 10, **characterized in that** the first impact valve (15) and/or the second impact valve (19) comprises a valve nozzle on the control direction axis (S₅, S₉), the valve nozzle being is encompassed by the respective valve seat (55, 95), wherein the control direction axis (S₅, S₉) is arranged offset to the effective axis (W) of the electromagnet (11) by at least the outer radius of the iron core (14) or the radius of the magnetic coil (12).

13. Field device according to one of the claims 1 to 12, **characterized in that** the second electromagnetic impact valve (19) has an open state in which it allows a fluid connection of the air chamber (3) to a pressure sink through an outlet aperture (68).

## Revendications

1. Appareil de champ actionné de façon pneumatique, présentant un acteur pneumatique, une source d'air comprimé pneumatique et un ensemble de soupape à plaques déflectrices (1) électromagnétique, celui-ci comprenant une chambre à air (3) dans laquelle débouchent trois canaux d'air (5, 7, 9) de l'appareil de champ, dans lequel les trois canaux d'air comportent
- un canal d'alimentation en air (5) pour la réception d'air comprimé à partir de la source d'alimentation en air comprimé,
- un canal d'air de commande (7) pour l'arrivée et l'évacuation d'air dans l'acteur pneumatique de l'appareil de champ et
- un canal d'évacuation d'air (9) menant de la chambre à air (3) vers un puits de pression, destiné à distribuer de l'air comprimé au puits de pression, tel que l'atmosphère,
dans lequel l'acteur communique avec le canal d'air de commande (7) et la source d'air comprimé pneumatique est reliée de façon pneumatique au canal d'alimentation en air (5) ;
**caractérisé en ce que**
l'ensemble de soupape à plaques déflectrices présente une première soupape antiretour électromagnétique (15) pour l'ouverture et/ou la fermeture du canal d'alimentation en air (5) et une deuxième soupape antiretour électromagnétique (19) pour l'ouverture et/ou la fermeture du canal d'évacuation d'air (9), lesquelles sont coordonnées de telle façon que le canal d'alimentation en air (5) et le canal d'évacuation d'air (9) peuvent être fermés simultanément,
dans lequel la première soupape antiretour (15) est fermée sans courant et la deuxième soupape antiretour (19) est ouverte sans courant.

2. Appareil de champ selon la revendication 1, **caractérisé en ce que** la première soupape antiretour (15) et la deuxième soupape antiretour (19) sont coordonnées de telle façon que
la deuxième soupape antiretour (19) se ferme avant l'ouverture de la première soupape antiretour (15) ; et que
la première soupape antiretour (15) se ferme avant l'ouverture de la deuxième soupape antiretour (19).

3. Appareil de champ selon la revendication 2, **caractérisé en ce qu'**une commutation entre un état d'augmentation de pression, dans lequel la deuxième soupape antiretour électromagnétique (19) est fermée et la première soupape antiretour électromagnétique (15) est ouverte, de manière à établir une liaison de communication pneumatique entre la source d'alimentation en air comprimé et l'acteur pneumatique, et un état de diminution de pression dans lequel la première soupape antiretour électromagnétique (15) est fermée et dans lequel la deuxième soupape antiretour électromagnétique (19) est ouverte, de manière à établir une liaison de communication pneumatique entre l'acteur pneumatique et le puits de pression, est toujours effectuée de telle façon qu'une transition se fait par l'état de pression constante de l'ensemble de soupape à plaques déflectrices électromagnétique, dans lequel aussi bien la première soupape antiretour électromagnétique (15) que la deuxième soupape antiretour électromagnétique (19) sont fermées.

4. Appareil de champ selon la revendication 1, 2 ou 3, **caractérisé en ce que** la première soupape antiretour (15) comporte :
- un organe de soupape antiretour, tel qu'une plaque déflectrice (51) ;
- un dispositif de réglage électromagnétique (11) déplaçant l'organe de soupape antiretour dans une direction de réglage axiale (S₅) pour ouvrir et/ou fermer le canal d'alimentation en air (5) ;
- un moyen de contrainte poussant l'organe de soupape antiretour dans une position de fermeture dans la direction de réglage axiale (S₅) pour fermer le canal d'alimentation en air (5).

5. Appareil de champ selon la revendication 4, **caractérisé en ce qu'**une pression de commande prédéterminée peut être réglée avec la première soupape antiretour (15) dans la chambre à air (3) et/ou le canal d'air de commande (7) en fonction d'un courant de commande du dispositif de réglage électromagnétique (11).

6. Appareil de champ selon l'une des revendications précédentes, **caractérisé en ce que** la première soupape antiretour (15) et la deuxième soupape antiretour (19) sont couplées l'une à l'autre de façon électromagnétique, dans lequel le même solénoïde (12), le même noyau de fer (13) et/ou la même ancre (14) se trouvent en liaison active électromagnétique avec la première soupape antiretour (15) et la deuxième soupape antiretour (19).

7. Appareil de champ selon l'une des revendications précédentes, **caractérisé en ce que** la première soupape antiretour (15) et la deuxième soupape antiretour (19) sont dimensionnées électromagnétiquement de manière identique, de sorte que des forces magnétiques quasiment équivalentes agissent sur la première soupape antiretour (15) et la deuxième soupape antiretour (19) lors de l'application du même courant de commande magnétique.

8. Appareil de champ selon l'une des revendications précédentes, **caractérisé en ce que** la première soupape antiretour (15) et la deuxième soupape antiretour (19) sont dimensionnées pneumatiquement de manière identique, de sorte que lors de l'application de la même différence de pression au niveau de la soupape antiretour (15, 19) respective, des forces de pression pneumatique quasiment équivalentes agissent sur les organes de soupape antiretour des soupapes antiretour.

9. Appareil de champ selon l'une des revendications précédentes, **caractérisé en ce que** la première soupape antiretour (15) et/ou la deuxième soupape antiretour (19) comportent un élément de fermeture (53, 93) situé sur l'axe de direction de réglage (S₅, S₉), lequel vient en prise de telle façon avec un orifice de soupape du canal d'air (5, 9) respectif entouré par le siège de soupape antiretour (55, 95) respectif pour la fermeture du canal d'air (5, 9) respectif, que l'organe de soupape antiretour est disposé à une distance axiale périphérique par rapport à l'orifice de soupape.

10. Appareil de champ selon l'une des revendications précédentes, **caractérisé en ce que** la deuxième soupape antiretour (19) comporte :
- un organe de soupape antiretour ;
- un dispositif de réglage électromagnétique (11) déplaçant l'organe de soupape antiretour dans une direction de réglage axiale (S₉) pour ouvrir et/ou fermer le canal d'évacuation d'air (9) ;
- une butée mécanique disposée dans la direction de réglage axiale (S₉) par rapport au siège de soupape antiretour (95), laquelle limite un trajet axial maximal de l'organe de soupape antiretour.

11. Appareil de champ selon l'une des revendications précédentes, **caractérisé en ce que** la première soupape antiretour (15) et/ou la deuxième soupape antiretour (19) comporte un orifice de soupape sur l'axe de direction de réglage (S₅, S₉), lequel est entouré par le siège de soupape antiretour (55, 95) respectif, dans lequel l'axe de direction de réglage (S₅, S₉) est orienté essentiellement parallèlement à l'axe d'action (W) de l'électro-aimant (11) et disposé dans la région du noyau de fer (14).

12. Appareil de champ selon l'une des revendications 1 à 10, **caractérisé en ce que** la première soupape antiretour (15) et/ou la deuxième soupape antiretour (19) comporte un orifice de soupape sur l'axe de direction de réglage (S₅, S₉), lequel est entouré par le siège de soupape (55, 95) respectif, dans lequel l'axe de direction de réglage (S₅, S₉) est disposé de manière à être décalé au moins selon le rayon extérieur du noyau de fer (14) ou selon le rayon du solénoïde (12) par rapport à l'axe d'action (W) de l'électro-aimant (11).

13. Appareil de champ selon l'une des revendications 1 à 12, **caractérisé en ce que** la deuxième soupape antiretour (19) présente un état ouvert permettant d'établir une liaison fluidique entre la chambre à air (3) et un puits de pression par le biais d'une ouverture de sortie (68).
